# EUROPEAN PATENT SPECIFICATION

(11) **EP 0 491 417 B1**
(45) Date of publication and mention of the grant of the patent: **30.10.1996**
(21) Application number: 91203202.6
(22) Date of filing: 07.12.1991
(51) Int. Cl.: F28D 1/053, F28D 1/03, B60K 11/04

(54) **Heat exchanger for vehicles**
Wärmetauscher für Fahrzeug
Echangeur de chaleur pour véhicules

(30) Priority: 18.12.1990 IT 2240990
(43) Date of publication of application: 24.06.1992
(73) Proprietor: Stella, Sauro, I-63023 Fermo (Ascoli Piceno) (IT)
(72) Inventor: Stella, Sauro, I-63023 Fermo (Ascoli Piceno) (IT)
(74) Representative: Fusina, Gerolamo

(56) References cited:
- EP-A- 0 221 623
- DE-A- 3 020 424
- FR-A- 1 339 475
- FR-A- 2 034 190
- GB-A- 495 096
- GB-A- 2 133 525
- US-A- 1 407 929
- US-A- 1 528 461
- US-A- 1 899 080
- US-A- 2 659 392
- US-A- 3 239 002
- US-A- 3 254 708
- PATENT ABSTRACTS OF JAPAN vol. 9, no. 235 (M-415)(1958) 21 September 1985 & JP-A-60 091 196 (YONAGO SEIKOSHO KK) 22 May 1985

## Description

The present invention is concerned with a heat exchanger, in particular a heat exchanger for vehicles.

The radiators, as they are presently made, are generally positioned perpendicularly to the travelling direction of vehicles, preferably in the front portion of said vehicles, wherein by "vehicle", any motor-vehicles, cars or aircrafts are meant. In that way, the surface exposed to air of said radiators makes up a part of the body of the relevant vehicles, and is superimposed to total vehicle's surface exposed to air or incident wind.

FR-A-1 339 475 refers to a conventional heat exchanger comprising a plurality of hollow elements in form of a tube having a particular transversal section. These hollow elements are connected at their opposite ends to a delivery manifold and return manifold of the exchanger.

US-A-3 239 002 relates to a further conventional heat exchanger having a plurality of hollow elements, in the shape of tubes, which form a single unit together with the upper and lower tanks. Each hollow element is a tube and is simply connected to the main upper and lower manifolds.

Also JP-A-60-91 196 shows a similar arrangement in which the tubes have a flattened shape and are arranged spaced apart from one another at a distance which corresponds to approximately 1/10 of their longitudinal length. The tubes are simply connected to the main upper and lower manifolds.

Under such conditions, in a radiator of such type as known from the prior art, mainly three parameters were optimized in the past, and namely: maximal heat exchange efficiency, minimal weight and minimal overall dimensions.

Such a type of radiator was also used on racing cars with exposed wheels, until approximately 20 years ago; then, in order to improve the dynamic efficiency of the car, the designers preferred to subdivide it into two parts, and installed said parts at the sides of the central portion of the bodywork, or fuselage, of the vehicle. It should be observed here that the introduction of this solution afforded further positive features as regards the soil effect, as the cars display nowadays a large bottom surface-area.

On the contrary, the radiators installed at the sides of the fuselage generate an additional surface against which air impinges, and which opposes to vehicle's progressing.

Consequently, an optimization of a radiator positioned in that way is determined by the best value which can be obtained, of three parameters, i.e.: maximal heat exchange efficiency, minimal weight and minimal absorbed power.

It can be immediately observed that the minimal overall dimensions -- which were, and still are, very important as regards the overall dimensions and the aerodynamics of mass-produced cars -- are not so important as regards the exposed-wheels racing cars. In fact, at the sides of the fuselage, two rather empty boxes are available, wherein the problem of radiator positioning is minimized. In this case, on the contrary, reducing to a minimum the resistance due to air flowing through said radiator, is of paramount importance.

In an attempt to solve this problem, the radiator, or air intake opening, was installed inclined, or arranged according to a preferential direction, with satisfactory results being anyway not achieved. In fact, in an arragement of traditional type, air undegoes a nearly total impact against the surface of the radiator, consequently inducing considerably high passive resistances due to the high speeds of the vehicle, and to the low speeds of air inside the radiator.

The purpose of the present invention is of providing a radiator which, while secures the maximal heat exchange and an operating way which is as good as possible, induced minimal passive resistances.

The structural and functional features, and the advantages of a heat exchanger for vehicles in general according to the present invention will be better understood from the following exemplifying, non-limitative disclosure, made by referring to the accompanying schematic drawings, in which:
Figure 1 shows a perspective view of a hollow element in a first form of practical embodiment of the heat exchanger for use in the present invention;
Figures 2 and 3 show sectional views of details, respectively made according to section lines II-II and III-III of Figure 1;
Figure 4 shows a perspective view of a hollow element in a second form of practical embodiment of the heat exchanger for use in the present invention;
Figures 5 and 6 show sectional views of details, respectively made according to section lines V-V and VI-VI of Figure 4;
Figure 7 shows a perspective view of a hollow element in a third form of practical embodiment of the heat exchanger for use in the present invention;
Figures 8 and 9 show sectional views of details, respectively made according to section lines VIII-VIII and IX-IX of Figure 7;
Figure 10 shows a perspective view of a hollow element in a fourth form of practical embodiment of the heat exchanger for use in the present invention;
Figures 11 and 12 show sectional views of details, respectively made according to section lines XI-XI and XI-XI of Figure 10;
Figure 13 shows a perspective view of a hollow element in a fifth form of practical embodiment of the heat exchanger for use in the present invention;
Figure 14 shows a sectional view of a detail according to section line XIV-XIV of Figure 13;
Figures 15 and 16 show partial perspective views of cars equipped with two different form of practical embodiments of heat exchangers, one (Fig. 15) being according to the present invention, and the other (Fig. 16) being outside the scope of the present invention, and
Figures 17, 18, 19, 20 and 21 schematically show five further forms of practical embodiment of heat exchangers, for use with the present invention.

Referring to the drawings, a set of hollow elements are illustrated, which make up parts of a heat exchanger of the type in which a fluid/air heat exchange takes place, according to the present invention, used, in particular, for exposed-wheel cars, such as racing cars.

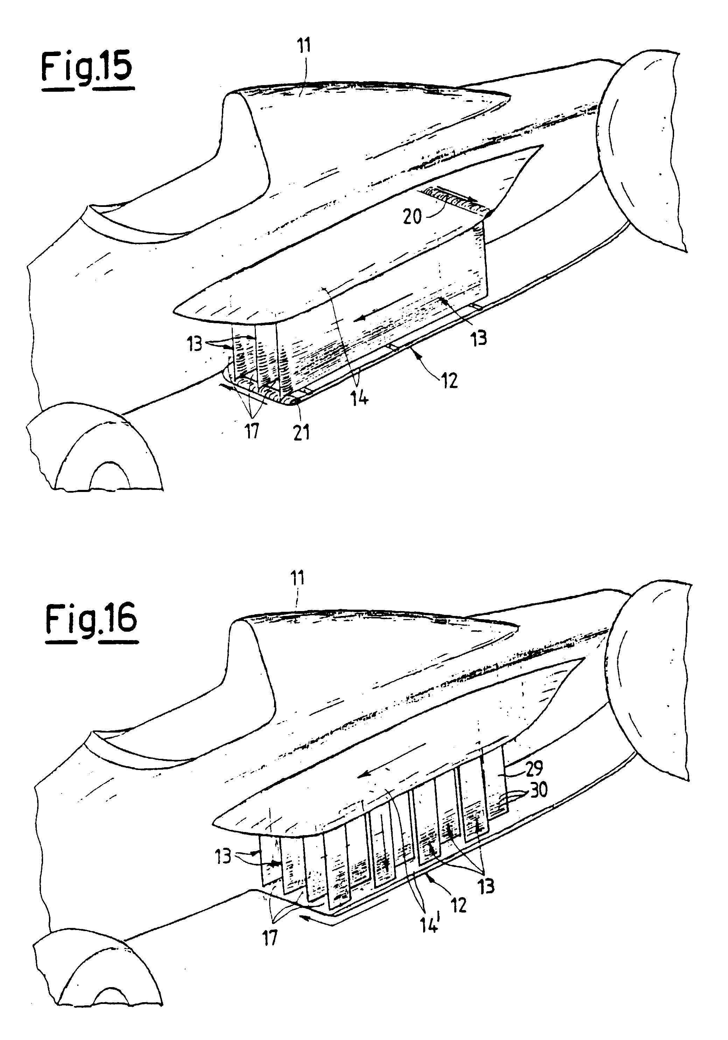

Figures 15 and 16 show how such a heat exchanger according to the present invention is positioned on a racing car, the fuselage or bodywork 11 of which is partially depicted, inside side boxes 12. Each heat exchanger is essentially constituted by a set of hollow elements 13 kept united to each other by opposite walls 14, and connected with delivery manifolds or ducts 15, and, respectively, with return manifolds or ducts 16, through which a high-temperature fluid to be cooled, e.g., water, coming from a heat source, such as an engine, is respectively delivered or returned.

Such an arrangement causes such hollow elements 13 to be exposed to the stream of air laterally impinging against the car, when the latter is travelling.

According to the invention, each of said side heat exchangers has a radiant surface which comprises the surface constituted by a plurality of fins exposed to air, and directly extending from said fluid-passage hollow elements.

The heat exchanger according to the invention is characterized in that it has said hollow elements 13, of flattened shape, superimposed to one another and/or placed alongside one another according to various patterns, and, in any case, in such a way as to define, between them, a set of variously shaped passages 17 for the air stream which laps them longitudinally.

Furthermore, a characterizing feature of the present invention is the considerably long distance, as compared to the prior art, existing between adjacent hollow elements: in the instant case, their distance is of approximately 1/10 of their longitudinal length, and said hollow elements are positioned parallel to the streamline of the vehicle.

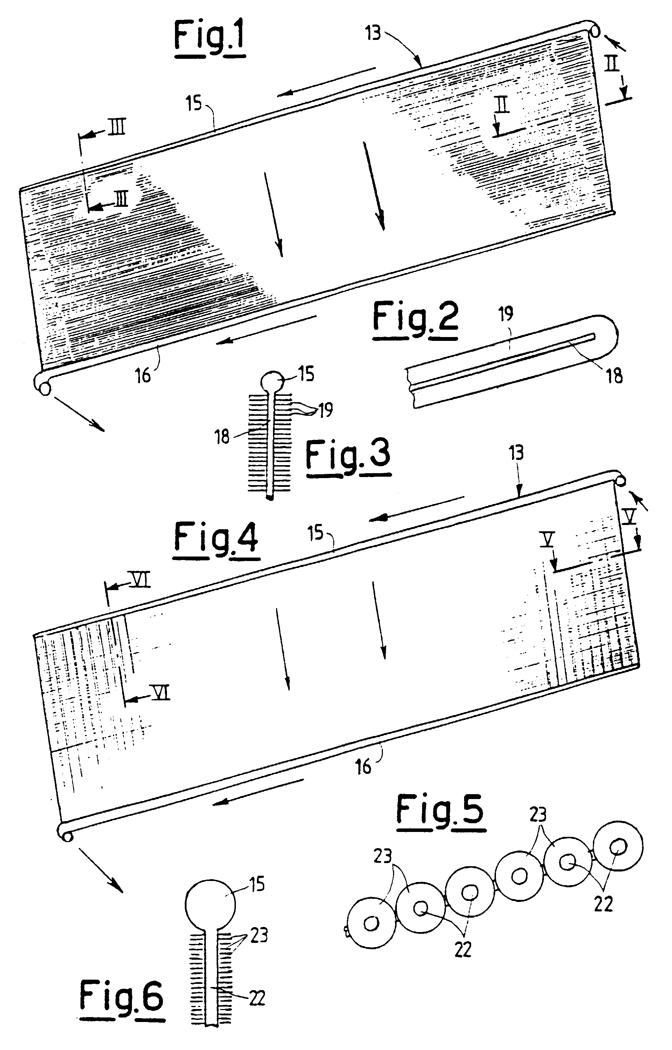

Going now into the details of the several forms of practical embodiment, one may observe that in Figures 1-3 a hollow element 13 for fluid passage is shown, which at its ends is respectively constituted, as said, by a delivery duct 15 for the high-temperature fluid to be cooled, and a return duct 16 for the cooled fluid. Between these ducts 15 and 16, there is interposed the hollow body of the element, which is constituted by a passage 18 running from up downwards, laterally to which cooling fins 19 are provided (as shown in Figures 2 and 3).

Figure 15 shows that inside the box 12 of a car 11, three hollow elements 13 are installed parallel to one another and in vertical position, so as to be connected, at one of their sides, with an inlet duct 20, through their three delivery ducts 15, and, at their other side, with an outlet duct 21, through their three return ducts 16. In that way, three longitudinal passages 17 are defined, which have an elongated parallelepipedal shape, narrow on vertical planes.

Furthermore, also Figures 4-6 and 7-9 display a hollow element 13 for fluid passage, which element is constituted by a delivery duct 15 and a return duct 16, horizontally and longitudinally positioned relatively to the element, respectively at top and bottom ends, i.e., sides of said element.

Figure 5 shows that the cross section of said hollow element is constituted by a plurality of vertical tubes 22 -- suitably provided with relevant fins 23 -- which connect the delivery duct 15 with the return duct 16.

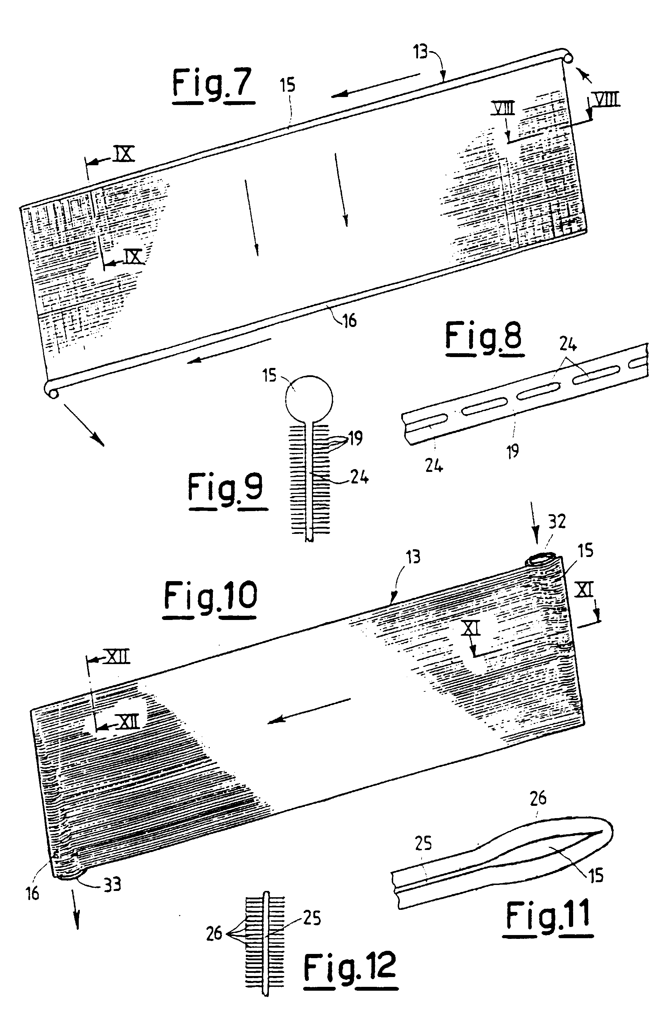

Figure 8 shows, on the contrary, that the cross section of the element 13 of Figure 7 is defined by a plate inside which a set of flattened, mutually parallel, mutually-spaced-apart, channels 24 are provided.

Figures 10-12 and 13-14 show further forms of practical embodiment, in which the delivery ducts 15 and the return ducts 16 are positioned at the sides --i.e., at the shorter ends -- of the radiative hollow element, according to vertical directions. Inside the body of the hollow element 13, a continuous water passage 25 is provided, which connects the whole delivery duct 15 with the whole return duct 16. Of course, also in this case fins 26 are provided sideways of the hollow element 13.

According to a preferred form of practical embodiment, the delivery and return ducts are positioned on a same vertical plane, along the shorter sides of said hollow elements, and display, the one, a top inlet opening 32; and the other one, a bottom outlet opening 33.

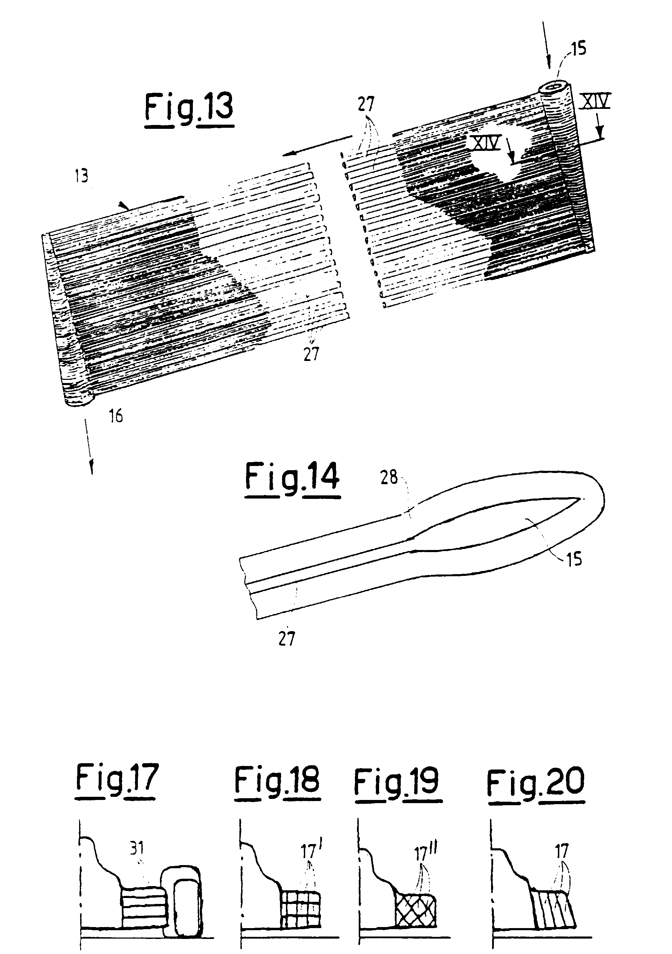

Also Figures 13 and 14 show a hollow element of the latter type, with vertical manifold ducts 15 and 16, wherein said ducts are connected by a plurality of horizontal tubes 27. Such tubes 27 are superimposed to each other according to a vertical direction, to constitute the body of the element, and bear a set of sideways fins 28.

Of course, the hollow elements can be made and positioned inside the boxes 12 according to a full range of combinations, which may be very different from one another, some of which are schematically shown in Figures 16-20 for exemplifying purposes.

Figure 16 shows how mutually opposite walls 14', respectively acting as the inlet manifold duct and the outlet manifold duct, are connected with each other, by a plurality of hollow, plate elements 29 vertically arranged and offset relativey to each other, at a distance approximately equating the length of each individual element. In that way, around fins 30 provided on the sides of the hollow, plate elements 29, a labyrinth passage is generated for the flowing air stream which laps the radiative surface, also said passage having a prevailingly longitudinal development.

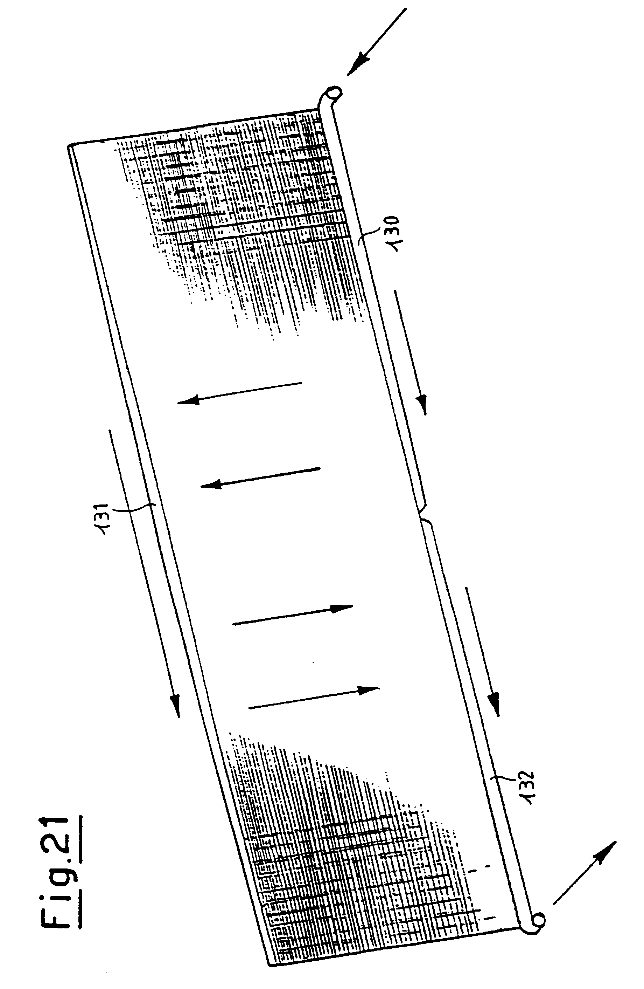

Figure 17 exemplifies then a further form of practical embodiment, in which hollow, plate elements schematically shown in 31 are arranged superimposed to each other, on parallel horizontal planes.

Figure 18 shows that said plate elements are suitably contoured, such as to display mutually crossing horizontal and vertical walls, suitable for defining a set of elongated, prismatic passages 17'.

Figure 19 shows how the plate elements are accomplished by the crossing of wall portions having a whatever slope, so that air passages 17'' of can be defined, which are of rhombic shape, triangular shape, or of any polygonal shape, whichever is regarded as the most advantageous and suitable one.

A latter form of practical embodiment, among those shown, exemplifies, in Figure 20, an alternate solution to the solution depicted in Figure 15. In Figure 20, the hollow, mutually parallel elements 13 are arranged inclined, or bent, between walls 14, so as to conform with the bodywork of the car.

According to the present invention, a heat exchanger for exposed-wheel vehicles is provided, in which very wide air passages have been individuated, which longitudinally run, as far as possible, along the whole length of the box, such as to minimize air resistance, while simultaneously improving the heat exchange between the fluid to be cooled, and air lapping the radiative hollow elements.

Thus, in preferred forms of practical embodiment it was found that, as already mentioned, in order to optimize as far as possible the efficiency as regards the resistance and the heat exchange, the individual hollow elements should be positioned at a mutual distance which approximately is of 1/10 of their length.

The hollow elements can be advantageously made from such materials as aluminum, copper, and so on, which have an optimal heat transmission coefficient for such applications.

Furthermore, it is important to observe that the wide passages between the hollow elements cause air to longitudinally lap said hollow elements, thus favouring the heat exchange.

Figure 21 shows a further form of practical embodiment of heat exchanger according to the present invention, in which, in a first half thereof, there is a bottom delivery manifold 130 which, by means of an upflow, sends the high-temperature fluid towards an upper intermediate manifold 131. The latter extends throughout the body of the heat exchanger and, in the second half of the latter, sends the fluid, by means of a flow in the opposite direction, i.e., downflow, towards a bottom outlet manifold 132. In that way, an inlet means and an outlet means for the fluid are provided at the same side, whilst, at the other side, and intermediate manifold is provided, which acts as a fluid return means.

Such an advantageous arrangement can be accomplished as well also in forms of practical embodiment already exposed hereinabove, such as, e.g., the one shown in Figure 16, with heat exchange being optimized.

## Claims

1. Heat exchanger, in particular for cars, of the type in which a fluid/air heat exchange takes place, which heat exchanger is essentially constituted by a plurality of flattened shaped hollow elements (13) through which a high-temperature fluid flows, each hollow element (13) being connected, at its opposite sides, with a delivery duct (15, 130) and with a return duct (16, 132), said hollow elements (13) being provided and connected with radiant surfaces in the form of fins (19, 23, 26, 28) exposed to atmospheric air, said hollow elements (13) being positioned parallel to one another and being arranged spaced apart from one another at a distance which corresponds to approximately 1/10 of their longitudinal length, all delivery ducts (15, 130) being connected at their one side with an inlet duct (20) and all return ducts (16, 132) being connected at their other side with an outlet duct (21), wherein each hollow element (13) is superimposed to one another and/or placed alongside each other, in order to define a number of wide longitudinal passages (17, 17', 17", 31) for a stream of flowing air which laps on said radiant surfaces, said fins (19, 23, 26, 28) extending along the whole longitudinal length of each said hollow element (13).

2. Heat exchanger according to claim 1, characterized in that said delivery and return ducts (15,130:16,132) are positioned along the longitudinal sides of said hollow elements (13) and extend horizontally.

3. Heat exchanger according to claim 1, characterized in that said delivery and return ducts (15,130;16,132) are positioned along the longitudinal sides of said hollow elements (13), and are horizontally arranged, on a same vertical plane, above one another.

4. Heat exchanger according to claim 1, characterized in that said delivery and return ducts (15,130;16,132) are vertically positioned along the shorter sides of said hollow elements (13).

5. Heat exchanger according to claim 1, characterized in that said delivery and return ducts (15,130;16,132) are positioned on a same vertical plane, along the shorter sides of said hollow elements (13), wand display: the one, a top inlet opening; and the other, a bottom outlet opening.

6. Heat exchanger according to claim 1, characterized in that said hollow elements (13) are plates internally provided with one single passage (18,25) for flowing fluid between said delivery duct (15) and return duct (16).

7. Heat exchanger according to claim 1, characterized in that said hollow elements are plates internally provided with a plurality of passages (24) for flowing fluid between said delivery duct (15) and said return duct (16).

8. Heat exchanger according to claim 7, characterized in that said passages inside said hollow elements (13), between said delivery duct (15) and return duct (16), are tubes (22,27).

9. Heat exchanger according to claim 7, characterized in that said plurality of passages for flowing fluid between said delivery duct (15) and said return duct (16) are hollows of flattened shape (24) integrally provided inside a plate which constitutes said hollow element.

10. Heat exchanger according to claim 1, characterized in that said hollow elements (13) are constituted by contoured plate elements with horizontal and vertical walls (14,14') crossing one another, which define a set of elongated passages (17',17") of prismatic shape.

11. Heat exchanger according to claim 1, characterized in that said hollow elements (13) are constituted by contoured plate elements with mutually crossing wall portions (14,14'), and showing a whatever slope, so as to define air passages (17,31) of any polygonal shapes.

12. Heat exchanger according to any preceding claims, characterized in that said delivery duct (130) and return ducts (132) are at least two, are positioned at the same side of the heat exchanger and an intermediate return duct (131) is provided, which reverses at least once the flowing direction of the high-temperature fluid.

## Patentansprüche

1. Wärmeaustauscher, insbesondere für Fahrzeuge, von der Art, worin ein Fluid/Luft-Wärmeaustausch stattfindet, welcher Wärmeaustauscher im wesentlichen von einer Mehrzahl von abgeflacht geformten hohlen Elementen (13) gebildet ist, durch die ein Hochtemperaturfluid strömt, wobei jedes hohle Element (13) an seinen entgegengesetzten Seiten mit einem Zuführungskanal (15, 130) und mit einem Rückführungskanal (16, 132) verbunden ist, wobei die hohlen Elemente (13) mit strahlenden Oberflächen in der Form von Rippen (19, 23, 26, 28), die nach der atmosphärischen Luft freiliegen, versehen und verbunden sind, wobei die hohlen Elemente (13) parallel zueinander positioniert und in einer Entfernung voneinander beabstandet angeordnet sind, welche angenähert 1/10 ihrer longitudinalen Länge entspricht, wobei alle Zuführungskanäle (15, 130) an ihrer einen Seite mit einem Einlaßkanal (20) verbunden sind und alle Rückführungskanäle (16, 132) an ihrer anderen Seite mit einem Auslaßkanal (21) verbunden sind, worin jedes hohle Element (13) miteinander überlagert und/oder längsseits miteinander plaziert ist, um eine Anzahl von breiten Längsdurchgängen (17, 17', 17", 31) für einen Strom von fließender Luft zu begrenzen, welcher sich auf bzw. in den ausstrahlenden Oberflächen windet, wobei sich die Rippen (19, 23, 26, 28) längs der gesamten longitudinalen Länge von jedem hohlen Element (13) erstrecken.

2. Wärmeaustauscher gemäß Anspruch 1, dadurch **gekennzeichnet,** daß die Zuführungs- und Rückführungskanäle (15, 130; 16, 132) längs den Längsseiten der hohlen Elemente (13) positioniert sind und sich horizontal erstrecken.

3. Wärmeaustauscher gemäß Anspruch 1, dadurch **gekennzeichnet,** daß die Zuführungs- und Rückführungskanäle (15, 130; 16, 132) längs den Längsseiten der hohlen Elemente (13) positioniert und horizontal auf einer gleichen Vertikalebene übereinander angeordnet sind.

4. Wärmeaustauscher gemäß Anspruch 1, dadurch **gekennzeichnet,** daß die Zuführungs- und Rückführungskanäle (15, 130; 16, 132) vertikal längs den kürzeren Seiten der hohlen Elemente (13) positioniert sind.

5. Wärmeaustauscher gemäß Anspruch 1, dadurch **gekennzeichnet,** daß die Zuführungs- und Rückführungskanäle (15, 130; 16, 132) auf einer gleichen Vertikalebene längs den kürzeren Seiten der hohlen Elemente (13) positioniert sind und zeigen: der eine eine obere Einlaßöffnung; und der andere eine untere Auslaßöffnung.

6. Wärmeaustauscher gemäß Anspruch 1, dadurch **gekennzeichnet**, daß die hohlen Elemente (13) Platten sind, welche innen mit einem einzigen Durchgang (18, 25) für das Fließen von Fluid zwischen dem Zuführungskanal (15) und dem Rückführungskanal (16) versehen sind.

7. Wärmeaustauscher gemäß Anspruch 1, dadurch **gekennzeichnet,** daß die hohlen Elemente Platten sind, die innen mit einer Mehrzahl von Durchgängen (24) für das Fließen von Fluid zwischen dem Zuführungskanal (15) und dem Rückführungskanal (16) versehen sind.

8. Wärmeaustauscher gemäß Anspruch 7, dadurch **gekennzeichnet,** daß die Durchgänge innerhalb der hohlen Elemente zwischen dem Zuführungskanal (15) und dem Rückführungskanal (16) Rohre (22, 27) sind.

9. Wärmeaustauscher gemäß Anspruch 7, dadurch **gekennzeichnet,** daß die Mehrzahl von Durchgängen für das Fließen von Fluid zwischen dem Zuführungskanal (15) und dem Rückführungskanal (16) Hohlräume von abgeflachter Form (24) sind, die integral im Inneren einer Platte vorgesehen sind, welche das hohle Element bildet.

10. Wärmeaustauscher gemäß Anspruch 1, dadurch **ge-kennzeichnet,** daß die hohlen Elemente (13) von konturierten Plattenelementen mit einander kreuzenden horizontalen und vertikalen Wänden (14, 14') gebildet sind, welche einen Satz von langgestreckten Durchgängen (17', 17") von prismatischer Form begrenzen.

11. Wärmeaustauscher gemäß Anspruch 1, dadurch **gekennzeichnet,** daß die hohlen Elemente (13) von konturierten Plattenelementen mit sich gegenseitig kreuzenden Wandteilen (14, 14') gebildet sind und irgendeine Neigung aufweisen, so daß sie Luftkanäle (17, 31) von irgendwelchen polygonalen Formen begrenzen.

12. Wärmeaustauscher gemäß irgendeinem der vorhergehenden Ansprüche, dadurch g e k e n n z e i c h n e t , daß der Zuführungskanal (130) und die Rückführungskanäle (132) wenigstens zwei sind, auf der gleichen Seite des Wärmeaustauschers positioniert sind und ein zwischenliegender Rückführungskanal (131) vorgesehen ist, welcher die Strömungsrichtung des Hochtemperaturfluids wenigstens einmal umkehrt.

## Revendications

1. Echangeur de chaleur, en particulier pour voitures, du type dans lequel prend place un échange thermique fluide/air, cet échangeur de chaleur est essentiellement constitué d'une pluralité d'éléments creux (13) auxquels est conférée une forme aplatie et au travers desquels circule un fluide à haute température, chaque élément creux (13) étant connecté, par ses côtés opposés, à une conduite d'alimentation (15, 130) et à une conduite de retour (16, 132), lesdits éléments creux (13) étant munis de, et connectés à des surfaces rayonnantes ayant la forme d'ailettes (19, 23, 26, 28) exposées à l'air atmosphérique, lesdits éléments creux (13) étant positionnés parallèlement les uns aux autres et étant disposés espacés les uns des autres selon une distance qui correspond à sensiblement 1/10 de leur longueur longitudinale, toutes les conduites d'alimentation (15, 130) étant connectées par un de leurs côtés à une conduite d'admission (20) et toutes les conduites de retour (16, 132) étant connectées, par leur autre extrémité, à une conduite d'évacuation (21), dans lequel chaque élément creux (13) est superposé à un autre et/ou placé le long de chaque autre afin de délimiter un certain nombre de larges passages longitudinaux (17, 17', 17", 31) pour un courant d'air circulant qui enveloppe lesdites surfaces rayonnantes, lesdites ailettes (19, 23, 26, 28) s'étendant sur toute la longueur longitudinale de chaque élément creux (13).

2. Echangeur de chaleur selon la revendication 1, caractérisé en ce que lesdites conduites d'alimentation et de retour (15, 130; 16, 132) sont positionnées le long des côtés longitudinaux desdits éléments creux (13) et ils s'étendent horizontalement.

3. Echangeur de chaleur selon la revendication 1, caractérisé en ce que lesdites conduites d'alimentation et de retour (15, 130; 16, 132) sont positionnées le long des côtés longitudinaux desdits éléments creux (13) et elles sont disposées horizontalement, sur un même plan vertical, l'une au-dessus de l'autre.

4. Echangeur de chaleur selon la revendication 1, caractérisé en ce que lesdites conduites d'alimentation et de retour (15, 130; 16, 132) sont positionnées verticalement le long des côtés les plus courts desdits éléments creux (13).

5. Echangeur de chaleur selon la revendication 1, caractérisé en ce que lesdites conduites d'alimentation et de retour (15, 130; 16, 132) sont positionnées sur un même plan vertical, le long des côtés les plus courts desdits éléments creux (13) et elles présentent : l'une une ouverture d'admission au sommet, et, l'autre une ouverture d'évacuation au fond.

6. Echangeur de chaleur selon la revendication 1, caractérisé en ce que lesdits éléments creux (13) sont des plaques munies intérieurement d'un passage unique (18, 25) pour la circulation d'un fluide entre ladite conduite d'alimentation (15) et la conduite de retour (16).

7. Echangeur de chaleur selon la revendication 1, caractérisé en ce que lesdits éléments creux (13) sont des plaques munies intérieurement d'une pluralité de passages (24), pour la circulation d'un fluide entre ladite conduite d'alimentation (15) et ladite conduite de retour (16).

8. Echangeur de chaleur selon la revendication 7, caractérisé en ce que lesdits passages dans lesdits éléments creux (13), entre ladite conduite d'alimentation (15) et ladite conduite de retour (16), sont des tubes (22, 27).

9. Echangeur de chaleur selon la revendication 7, caractérisé en ce que ladite pluralité de passages pour la circulation du fluide entre la conduite d'alimentation (15) et la conduite de retour (16) sont creux et de forme aplatie (24), prévus dans une plaque dont ils font partie intégrante et qui constitue ledit élément creux.

10. Echangeur de chaleur selon la revendication 1, caractérisé en ce que lesdits éléments creux (13) sont constitués d'éléments de plaque profilés ayant des parois horizontales et verticales (14, 14') se recoupant les unes avec les autres qui délimitent une série de passages allongés (17', 17") de forme prismatique.

11. Echangeur de chaleur selon la revendication 1, caractérisé en ce que lesdits éléments creux (13) sont constitués d'éléments de plaque profilés ayant des portions de paroi se recoupant mutuellement (14, 14') et présentant quelque pente de manière à délimiter des passages d'air (17, 31) de toutes formes polygonales.

12. Echangeur de chaleur selon l'une quelconque des revendications précédentes, caractérisé en ce que ladite conduite d'alimentation (130) et lesdites conduites de retour (132) sont au moins deux, elles sont positionnées sur le même côté de l'échangeur de chaleur et on prévoit une conduite intermédiaire de retour (131) qui inverse, au moins une fois, le sens de la circulation du fluide à haute température.
